# EUROPÄISCHE PATENTANMELDUNG

(11) **EP 0 970 835 A1**
(43) Veröffentlichungstag der Anmeldung: **12.01.2000**
(21) Anmeldenummer: 99110945.5
(22) Anmeldetag: 07.06.1999
(51) Int. Cl.: B60J 7/22

(54) **Windschott für ein Cabriolet**

(30) Priorität: 09.07.1998 DE 19830699
(71) Anmelder: Volkswagen Aktiengesellschaft, 38436 Wolfsburg (DE)
(72) Erfinder: Le Claire, Christoph, Dipl.-Ing., 38444 Wolfsburg (DE); Boy, Hans-Joachim, 38518 Gifhorn (DE)

(57) **Zusammenfassung**

Die Erfindung betrifft ein Windschott für ein Cabriolet mit einem Windschottbügel. Erfindungsgemäß ist der Windschottbügel mit einer darin eingespannten Windschottfläche in Fahrzeugquerrichtung zweiteilig ausgeführt und besteht aus einem ersten, fahrerseitigen Windschottbügel (2) und einem zweiten, beifahrerseitigen Windschottbügel (3). Der fahrerseitige Windschottbügel (2) ist am Fahrersitz (9) und entsprechend der beifahrerseitige Windschottbügel (3) am Beifahrersitz (10) befestigt. In einer weiteren Ausgestaltung ist zudem jedem Windschottbügel eine Spanntuch-Kassette (4, 5) zugeordnet mit einem horizontal über den Bereich hinter dem jeweiligen Frontsitz ausziehbaren Spanntuch (6) als Windschott-Tuch. Damit wird bei guter variabler Windschottfunktion ein leichter Einstieg zu Hintersitzen möglich.

## Beschreibung

Die Erfindung betrifft ein Windschott für ein Cabriolet nach dem Oberbegriff des Anspruchs 1.

Bei einer Cabriofahrt mit offenem Verdeck wird der Luftstrom von der Windschutzscheibe über das Fahrzeug gelenkt und verursacht von hinten her eine Luftverwirbelung im Fahrgastraum. Dies führt zu einem lästigen Zerzausen der Haare und zu einer unangenehmen Zugluft im Nackenbereich. Zudem wird die Wirkung einer Heizung verringert, da durch die Luftbewegung das Wärmepolster im Fahrgastraum mitverwirbelt und entfernt wird. Weiter tritt eine hohe Geräuschbelastung, insbesondere bei höheren Geschwindigkeiten auf, die eine Unterhaltung ebenso wie das Hören von Musik oder von Verkehrsnachrichten verhindert oder zumindest erschwert.

Um hier eine Verbesserung zu schaffen, sind sog. Windschotts bekannt, die aus umrahmten Netzgeflechten oder in Rolloform hinter den Frontsitzen im Kopfbereich der Fahrzeugbenutzer anbringbar sind.

Bei kleineren, zweisitzigen Cabriolets schließt der heckseitige Karosseriebereich oder ein Verdeckkasten unmittelbar an die Frontsitze an. In diesem Fall ist es für eine Unterbindung der Zugluft ausreichend, nur ein vertikales Windschott vorzusehen. Dazu ist es bekannt, bei einem Cabriolet mit einem im Bereich hinter den Frontsitzen angeordneten Überrollbügel und einem sich daran anschließenden, nach vorne offenen Verdeckkasten ein Windschottrollo etwa in Höhe des Verdeckkastens anzubringen (DE 196 17 702 C1). Das Windschutzrollo wird von unten nach oben in eine Gebrauchsstellung ausgezogen und am Querträger des Überrollbügels eingehängt. Für größere Cabriolets, insbesondere mit Fondsitzen, würde eine solche feste Rolloanordnung hinter den Frontsitzen eine ungünstige Barriere bilden.

Es ist daher auch bekannt, bei einem viersitzigen Cabriolet eine ähnliche Windschutzrollo-einrichtung am Fahrzeugboden anzubringen (EP 0 340 796 A2). Mit einer solchen Rolloanordnung bis zum Fahrzeugboden wird auch ein Luftstrom, der von hinten aus dem Bereich der Fondsitze kommt, abgehalten. Eine solche Rolloanordnung ist jedoch nur bei wenigen Cabrioletkonstruktionen mit flachem Boden einsetzbar, da ein Großteil der Cabriolets einen aufgewölbten Mitteltunnel aufweisen.

Um bei größeren Cabriolets, insbesondere bei Viersitzer-Cabriolets einen Luftstrom zu unterbinden, der von hinten über den Fondsitzbereich nach unten in den Fahrzeuginnenraum eindringt, ist es weiter bekannt, ein Windschott zweiteilig auszuführen, wobei ein Vertikalteil etwa in Kopfhöhe hinter den Frontsitzen angebracht ist und ein Horizontalteil etwa in Bordhöhe den anschließenden hinteren Bereich, insbesondere über Fondsitzen abdeckt (DE 38 36 375 C2). Dazu ist es beispielsweise bekannt, ein solches zweigeteiltes Windschott so auszuführen, daß die beiden Teile zusammenklappbar und hinter einer Fondsitzlehne verstaubar sind (EP 0 779 172 A1). In einer weiteren bekannten Ausführungsform (DE 93 03 717 U1) besteht der Vertikalteil aus einem in einem Rahmen eingespannten Netz, wobei der Rahmen an den Fahrzeugseiten in dortigen Halterungen einsteckbar ist. An der Unterseite des Rahmens ist zudem ein flexibles, weiteres Netz mit einer Netzkante angebracht, das bei Bedarf über den Fondsitzbereich gespannt werden kann und mit der hinteren Kante an den Fondsitzlehnen mit Klettbändern befestigbar ist.

Eine weitere Ausführungsform eines Windschotts (US-PS 5 211 718) besteht aus einem U-Bügel als Überrollbügel, der mit seinen U-Schenkeln an gegenüberliegenden Fahrzeugseiten im Bereich hinter den Frontsitzen angebracht ist, wobei die U-Basis als Bügelquerträger in Fahrzeugquerrichtung über der Kopfhöhe von Fahrzeugbenutzern verläuft. Zudem weist diese Ausführungsform eine Rolloeinrichtung mit einer in Fahrzeugquerrichtung im U-Bügelbereich angeordneten Wickelrolle auf. Darauf ist ein auf- und abwickelbares Windschutzrollo angebracht, wobei die Wickelrolle in Aufwickelrichtung federvorgespannt ist. Mit diesem Windschutzrollo ist in der abgewickelten Gebrauchsstellung die U-Bügelfläche abdeckbar. Die Rolloeinrichtung liegt hier als Rollokassette etwa in Bordhöhe und das Windschutzrollo ist von unten nach oben ausfahrbar und am Bügelquerträger in der Gebrauchsstellung einhängbar. Anschließend an die Rollokassette und mit dieser verbunden, schließt sich nach hinten ein weiteres Windschotteil an, das einen Rahmen mit einem Netz aufweist. Das zweite hintere Windschotteil deckt horizontal einen Fondsitzbereich ab.

Cabriolets als Viersitzer-Cabriolets oder mit einem größeren Stauraum hinter den Frontsitzen sind regelmäßig als zweitürige Fahrzeuge ausgebildet. Alle vorstehend genannten Ausführungsformen in Verbindung mit einer Horizontalabdeckung eines Heckbereichs sind karosseriefest angeordnet und erstrecken sich über die gesamte Fahrzeugbreite. Daher wird durch das Windschott nachteilig in Bordhöhe eine Barriere geschaffen, die den Durchstieg zu den Fondsitzen versperrt, so daß die hinteren Sitze in Verbindung mit dem Windschott nicht genutzt werden können. Daher sind nahezu alle bekannten Konstruktionen abnehmbar und entsprechend aufwendig ausgeführt. Zusätzlich ergibt sich dann das Problem bei den ohnehin meist beengten Platzverhältnissen eines Cabriolets, ein abgenommenes Windschott zu verstauen.

Aufgabe der Erfindung ist es, ein Windschott für ein Cabriolet so weiterzubilden, daß die Benutzung zum Verstauen vereinfacht wird und die Windschutzfunktion auch bei der Belegung der hinteren Sitze erhalten bleibt.

Diese Aufgabe wird mit den Merkmalen des Anspruchs 1 gelöst.

Gemäß Anspruch 1 ist der Windschottbügel in Fahrzeugquerrichtung zweiteilig ausgeführt und besteht aus einem ersten, fahrerseitigen und einem zweiten, beifahrerseitigen Windschottbügel. Der fahrerseitige Windschottbügel ist am Fahrersitz und entsprechend der beifahrerseitige Windschottbügel am Beifahrersitz befestigt.

Als Windschottbügel wird hier ein allgemein bekannter U-Bügel verstanden, wobei jedoch auch geschlossene Rahmenanordnungen mit dem Begriff umfaßt sein sollen.

Durch die Teilung des Windschotts in einzelne, den jeweiligen Frontsitzen zugeordnete Windschottbügel in Verbindung mit der Anbindung an den jeweiligen Fahrzeugsitz bleibt der Sitzverstellbereich der Vordersitze unabhängig voneinander voll erhalten. Bei Cabriolets sind üblicherweise die Vordersitze zur Erleichterung des Einstiegs zu Fondsitzen klappbar ausgeführt, wobei zumindest die Sitzlehnen klappbar sind. Bei einer Lehnenanbindung der beiden Windschottbügel nach Anspruch 2, ist ein leichter Einstieg zu den Fondsitzen gegeben, ohne daß eine Behinderung vom Windschott ausgeht. Zudem kann das Windschott mit in Funktionsstellung befindlichen Windschottbügeln vorteilhaft auch trotz belegter Fondsitze genutzt werden.

In einer besonders bevorzugten Weiterbildung nach Anspruch 3 umfaßt das Windschott weiter jeweils eine, den beiden Windschottbügeln zugeordnete Spanntuch-Kassette. Diese enthält ein horizontal über den Bereich hinter den Frontsitzen vorzugsweise über einen Fondsitzbereich ausziehbares Spanntuch als Windschott-Tuch. Die Spanntuch-Kassetten sind ebenfalls mit dem entsprechenden Fahrzeugsitz vorzugsweise im oberen, hinteren Lehnenbereich befestigt. Damit sind auch diese Spanntuch-Kassetten, wie vorstehend beschrieben, mit den zugeordneten Fahrzeugsitzen ohne Behinderung von Fondsitzbenutzern verbunden. Bei einem in die Spanntuch-Kassette eingerollten Spanntuch ist durch ein Vorklappen des zugeordneten Vordersitzes ein leichter Einstieg zu dem jeweils dahinterliegenden Fondsitz gegeben. Vorteilhaft kann auch nur ein Spanntuch als Windschott-Tuch ausgerollt und aufgespannt werden. Wenn nur ein Fondsitz mit einer Person besetzt ist, kann dann der andere Fondsitz mit einem darüber gespannten Spanntuch vorteilhaft abgedichtet werden.

Zweckmäßig bilden jeweils eine Spanntuch-Kassette und ein zugeordneter Windschottbügel eine Baueinheit, die schnell befestigbar und auch demontierbar ausgebildet sein soll.

In einer weiteren, vorteilhaften Ausbildungsform nach Anspruch 5 sind die Windschottbügel von einer etwa vertikalen Funktionsstellung jeweils in eine etwa horizontale Bereitschaftsstellung klappbar ausgeführt. Dadurch können je nach Bedarf ein oder beide Windschottbügel in ihre Funktionsstellung hochgeklappt werden. In der zurückgeklappten Bereitschaftsstellung wird die Optik eines bügelfreien Cabriolets vermittelt.

Anhand einer Zeichnung wird die Erfindung näher erläutert.

Es zeigen;
- Fig. 1: eine schematische Seitenansicht auf einen Frontsitz eines Cabriolets mit einem Windschott und
- Fig. 2: eine entsprechende Draufsicht auf die Frontsitze.

Ein Windschott 1 für ein Cabriolet besteht aus einem ersten, fahrerseitigen Windschottbügel 2 und einem zweiten, beifahrerseitigen Windschottbügel 3, die jeweils zusammen mit einer Spanntuch-Kassette 4, 5 eine Baueinheit bilden.

Diese Baueinheiten sind im hinteren, oberen Lehnenbereich 7, 8 von Frontsitzen 9, 10 befestigt, wobei die Windschottbügel 2, 3 von einer etwa vertikalen Funktionsstellung in eine (gestrichelt gezeichnete) etwa horizontale Bereitschaftsstellung klappbar sind. Aus jeder Spanntuch-Kassette 4, 5 ist ein Spanntuch 6 als Windschott-Tuch horizontal über den Bereich eines jeweils hinteren (nicht dargestellten) Frontsitzes ausziehbar.

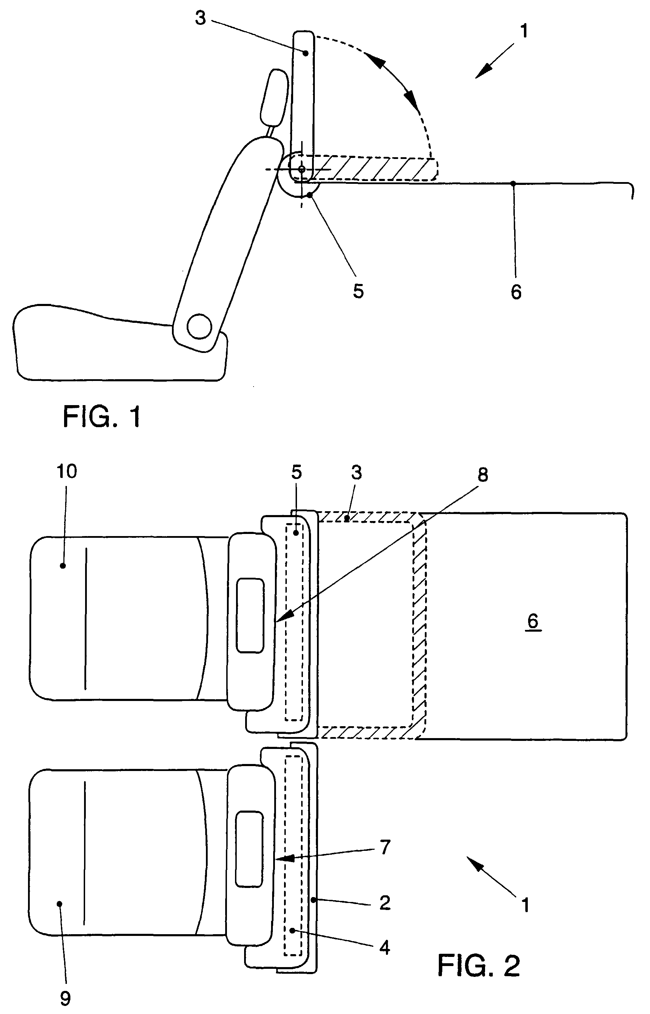

Die dargestellte Anordnung hat folgende Funktion: Am Fahrzeugsitz 9 in Fig. 2 ist der dort zugeordnete Windschottbügel 2 in seine vertikale Funktionsstellung aufgestellt und das Spanntuch in der Spanntuch-Kassette 4 eingerollt. Damit ist der Fondsitz hinter dem Frontsitz 9 für eine Sitzbelegung frei. Für einen Einstieg dahin kann der Frontsitz 9 bzw. der Lehnenbereich 7 zusammen mit der Baueinheit aus dem Windschottbügel 2 und der Spanntuch-Kassette 4 nach vorne geklappt werden.

Der (nicht belegte) Fondsitzbereich hinter dem Frontsitz 10 ist dagegen durch das ausgezogene Spanntuch 6 als Windschott-Tuch abgedeckt und abgedichtet.

## Patentansprüche

1. Windschott für ein Cabriolet,
mit wenigstens einem Windschottbügel, in den eine Windschottfläche eingespannt ist und der in seiner Funktionsstellung in Fahrzeugquerrichtung im oberen Rückenlehnenbereich der Frontsitze etwa in Kopfhöhe hinter Sitzbenutzern verläuft,
dadurch gekennzeichnet,
daß der Windschottbügel in Fahrzeugquerrichtung zweiteilig ausgeführt ist und aus einem ersten, fahrerseitigen Windschottbügel (2) und einem zweiten, beifahrerseitigen Windschottbügel (3) besteht und
daß der fahrerseitige Windschottbügel (2) am Fahrersitz (9) und entsprechend der beifahrerseitige Windschottbügel (3) am Beifahrersitz (10) befestigt ist.

2. Windschott nach Anspruch 1, dadurch gekennzeichnet, daß die beiden Windschottbügel (2, 3) an den Rückenlehnen (7, 8) der zugeordneten Fahrzeugsitze (9, 10) befestigt sind und die Fahrzeugsitze (9, 10) und/oder die Rückenlehnen (7, 8) zusammen mit den jeweiligen Windschottbügeln (2, 3) nach vorne klappbar ausgeführt sind.

3. Windschott nach Anspruch 1 oder 2, dadurch gekennzeichnet, daß das Windschott eine den Windschottbügeln (2, 3) zugeordnete Spanntuch-Kassette (4, 5) mit einem horizontal über den Bereich hinter den Frontsitzen, vorzugsweise über einen Fondsitzbereich ausziehbaren Spanntuch (6) als Windschott-Tuch umfaßt, die mit dem entsprechenden Fahrzeugsitz (9, 10) vorzugsweise im oberen, hinteren Lehnenbereich (7, 8) befestigt ist.

4. Windschott nach Anspruch 3, dadurch gekennzeichnet, daß ein Windschottbügel und eine zugeordnete, im unteren Bereich des Windschottbügels angeordnete Spanntuch-Kassette jeweils eine Baueinheit bilden.

5. Windschott nach einem der Ansprüche 1 bis 4, dadurch gekennzeichnet, daß die Windschottbügel (2, 3) von einer etwa vertikalen Funktionsstellung in eine etwa horizontale Bereitschaftsstellung klappbar sind.
